# EUROPÄISCHE PATENTSCHRIFT

(11) **EP 2 006 480 B1**
(45) Veröffentlichungstag und Bekanntmachung des Hinweises auf die Patenterteilung: **19.12.2012**
(21) Anmeldenummer: 08164908.9
(22) Anmeldetag: 27.02.2007
(51) Int. Cl.: E05F 5/10, E05F 5/02, F16F 9/00, F16F 9/516

(54) **Dämpfer für Möbel**
Damper for furniture
Amortisseur pour meuble

(30) Priorität: 01.03.2006 DE 202006003197 U
(43) Veröffentlichungstag der Anmeldung: 24.12.2008
(62) Teilanmeldung aus: 07712338.8
(73) Patentinhaber: Hettich-ONI GmbH & Co. KG, 32606 Vlotho (DE)
(72) Erfinder: Rommelmann, Cord, 32694, Dörentrup (DE); Beckmann, Wolfgang, 32609, Hüllhorst (DE)
(74) Vertreter: Dantz, Jan Henning

(56) Entgegenhaltungen:
- EP-A- 0 216 680
- DE-A1- 10 054 904
- US-A- 4 629 167
- US-A1- 2004 174 101

## Beschreibung

Die vorliegende Erfindung betrifft einen Dämpfer für Möbel, insbesondere für Scharniere, mit einem Gehäuse, in dem ein mit einer Kolbenstange verbundener Kolben verschiebbar aufgenommen ist, wobei ein Fluid bei einer Bewegung des Kolbens innerhalb des Gehäuses durch einen Strömungskanal am oder im Kolben strömt, wobei bei Bewegung des Kolbens in unterschiedliche Richtungen eine unterschiedliche Dämpfungskraft erhalten wird.

Es gibt Dämpfer für Möbel, bei denen in einem Kolben eine Mikrobohrung angeordnet ist, sodass ein Fluid bei Bewegung des Kolbens von einer Seite des Kolbens zur anderen strömen kann, so dass die Bewegung des Kolbens durch das Fluid gedämpft ist. Bei der Herstellung solcher Mikrobohrungen, die meist kleiner als 0,15 mm sind, besteht der Nachteil, dass der Herstellungsprozess zeitaufwendig ist, da einen hohe Genauigkeit gefordert wird und zudem die Werkzeuge einem hohen Verschleiß unterliegen. Bei geringen Maßabweichungen können die Dämpfungskräfte völlig unterschiedliche ausfallen. Zudem können Mikrobohrungen durch kleine Partikel leicht verstopfen. Daher ist der Einsatz von Schaumstoffelementen zum Volumenausgleich nicht möglich, da losgelöste kleine Partikel das System blockieren könnten. Schließlich wird bei kleinen Mikrobohrungen die Wand ausgewaschen, sodass sich der Durchmesser nach gewisser Zeit vergrößert. Dadurch ändern sich die Eigenschaften des Dämpfers.

Ferner sind Dämpfer bekannt, bei denen das Fluid über einen Ringspalt zwischen Kolben und Gehäusewand strömt. Auch hier haben geringste Maßabweichungen am Kolbendurchmesser oder beim Zylinderinnendurchmesser große Auswirkungen auf das Dämpfungsverhalten. Toleranzen können sich addieren und insbesondere kann bei Veränderung des Innendrucks sich die Gehäusewand aufbiegen und den Ringspalt vergrößern. Zudem können sich auch hier Verunreinigungen nachteilig auf das Dämpfungsverhalten auswirken.

Aus der DE 100 54 904 ist ein Dämpfungselement für bewegliche Möbelteile bekannt. Dabei ist an einem bewegbaren Kolben eine Ventileinrichtung mit einem ringförmigen elastischen Schiebeventil vorgesehen, die bei einer Bewegung des Kolbens in unterschiedliche Richtung auch eine unterschiedlich große Dämpfung bewirkt. Der Aufbau einer solchen Ventileinrichtung ist jedoch vergleichsweise aufwendig und es können die oben genannten Probleme des Verstopfens der Strömungskanäle auftreten.

Aus der DE 202 21 550 ist ein Dämpfer für bewegliche Möbelteile bekannt, bei dem bewegbare Ringscheiben vorgesehen sind, mittels denen Durchlassöffnungen in einem Kolben ganz oder teilweise abgedeckt werden. Dadurch kann zwar eine unterschiedliche Dämpfungskraft bei Bewegung des Kolbens in gegenüberliegende Richtungen erreicht werden, allerdings ist die Stärke der Dämpfungskraft nur schlecht einstellbar. Werden die Strömungsquerschnitte zu klein, erfolgt eine hohe Materialbelastung und ein schneller Verschleiß. Werden größere Strömungsquerschnitte realisiert, bleibt die Dämpfungskraft für viele Anwendungen zu gering.

Die US 4 629 167 offenbart die Merkmale des Oberbegriffs des Anspruchs 1.

Es ist daher Aufgabe der vorliegenden Erfindung, einen Dämpfer für Möbel zu schaffen, der in der Benutzung unempfindlich ist und individuell an den jeweiligen Einsatzzweck relativ genau angepasst werden kann.

Diese Aufgabe wird mit einem Dämpfer mit den Merkmalen des Anspruches 1 gelöst.

Da der Dämpfer als Druckdämpfer ausgebildet ist, sind an der Kolbenstange und/oder dem Gehäuse als nach außen offene Ösen ausgebildete Rastmittel, vorzugsweise mit biegbaren Schenkeln, zum Verbinden mit einem weiteren Bauteil vorgesehen, wobei die Zugbelastungen bei der Bewegung der Kolbenstange geringer sind als die Haltekräfte der Rastmittel, so dass der Dämpfer einfach und schnell montiert und auch nachgerüstet werden kann.

Die Erfindung wird nachfolgend anhand von mehreren Ausführungsbeispielen mit Bezug auf die beigefügten Zeichnungen näher erläutert. Es zeigen:
- Figur 1: eine teilweise geschnittene Seitenansicht einer Ausführungsform eines Dämpfers;
- Figur 2: eine perspektivische Detailansicht des Dämpfers der Figur 1;
- Figur 3: eine schematische Ansicht des Dämpfers der Figur 1 im Bereich des Kolbens;
- Figur 4A und 4B: zwei Ansichten des Dämpfers der Figur 1;
- Figur 5: eine Detailansicht eines zu dem Ausführungsbeispiel der Figur 1 modifizierten Dämpfers.

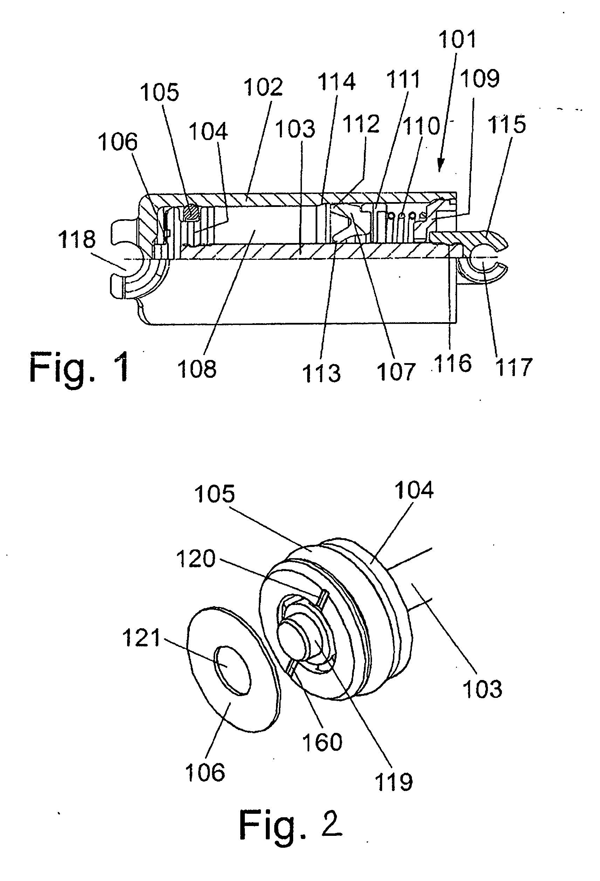

Bei der in den Figuren 1 bis 4 gezeigten Ausführungsform ist ein Dämpfer 101 vorgesehen, der ein zylindrisches Gehäuse 102 umfasst, in dem an einer Kolbenstange 103 ein Kolben 104 verschiebbar geführt ist. An einem äußeren Umfang des Kolbens 104 ist in einer Nut ein Dichtring 105 aufgenommen. Die Nut weist dabei eine Breite auf, die größer ist als der Querschnitt des Dichtringes 105, so dass dieser bei zu hohem Druck von der Innenwand des Gehäuses 102 in die Nut eingepresst werden kann, um zu hohe Reibungskräfte beim Bewegen des Kolbens 104 zu vermeiden.

Benachbart zu dem Kolben 104 ist an einem Ende der Kolbenstange 103 oder an einem Fortsatz des Kolbens 104 eine Platte 106 fixiert. An der gegenüberliegenden Seite des Kolbens 104 ist ein Augleichskolben in dem Gehäuse 102 aufgenommen, der eine Volumenänderung aufgrund des Bewegens der Kolbenstange 103 kompensiert. Der Ausgleichskolben umfasst einen Dichtring 107, der an einem Haltering 111 angeordnet ist. Der Dichtring 107 stellt eine Abdichtung zu einem Innenraum 108 in dem Gehäuse 102 her, wobei der Dichtring 107 eine äußere Dichtlippe 112 besitzt, die an der Innenseite des Gehäuses 102 anliegt, sowie eine innere Dichtlippe 113 besitzt, die an der Kolbenstange 103 anliegt. Dadurch kann die Dichtung 107 gleichzeitig eine Abdichtung an der Kolbenstange 103 als auch an dem Gehäuse 102 bereitstellen.

Die Dichtung 107 und der Haltering 111 sind über eine Feder 110 vorgespannt, die an dem Haltering 111 und an der gegenüberliegenden Seite an einem Deckel 109 anliegt. Der Deckel 109 ist dabei nur rastend an dem Gehäuse 102 festgelegt, da die Kräfte aufgrund der Feder 110 gering sind.

An der Kolbenstange 103 ist ein Rastelement 115 über eine Rastnase 116 an einer Nut oder Verprägung fixiert, das eine teilweise offene Öse 117 ausbildet, so dass ein weiteres Bauteil, beispielsweise eines Möbelscharniers über die Schenkel an der Öse 117 eingerastet werden kann, also eine einfach Montage möglich ist. Das Rastelement 115 löst sich nicht von der Kolbenstange 103, da ein Herausziehen der Kolbenstange 103 leichtgängig erfolgt und die Haltekräfte der einzelnen Rastmittel größer sind als die entgegenwirkenden Kräfte beim Herausziehen der Kolbenstange 103. Für die Rastnasen 116 kann an der Kolbenstange 103 eine Verprägung vorgesehen sein, so dass keine spanende Bearbeitung der Kolbenstange 103 erforderlich ist. Dadurch kann die aus Metall bestehenden Kolbenstange 103 im Durchmesser sehr dünn ausgebildet sein, vorzugsweise in einem Bereich zwischen 1,5mm bis 3,5 mm, insbesondere 2,0 mm bis 3,0 mm. Dadurch wird bei Ein- und Ausfahren der Kolbenstange 103 nur ein geringer Volumenausgleich notwendig.

Der Dämpfer 101 ist als Druckdämpfer ausgebildet, bei dem die Kraft zum Einfahren der Kolbenstange 103 mindestens fünfmal, vorzugsweise acht bis zwölf mal größer ist als die Kraft zum Herausziehen der Kolbenstange 103.

Zwischen dem Kolben 104 und der ringförmigen Platte 106 ist ein Strömungskanal 120 ausgebildet, der abschnittsweise durch zwei sich diametral zur Achse der Kolbenstange 103 gegenüberliegende radiale Nuten 160 gebildet ist. Der äußere Durchmesser der Platte 106 ist dabei geringer als der Durchmesser des Kolbens 104. In der Platte 106 ist eine Öffnung 121 mittig ausgespart, so dass die Platte 106 auf ein zapfenförmiges Ende 119 der Kolbenstange 103 oder des Kolbens 104 aufgesteckt werden kann. Zur Fixierung der Platte 106 wird dann das zapfenförmige Ende 119 verformt, so dass die Platte sicher an dem Kolben 104 gehalten ist.

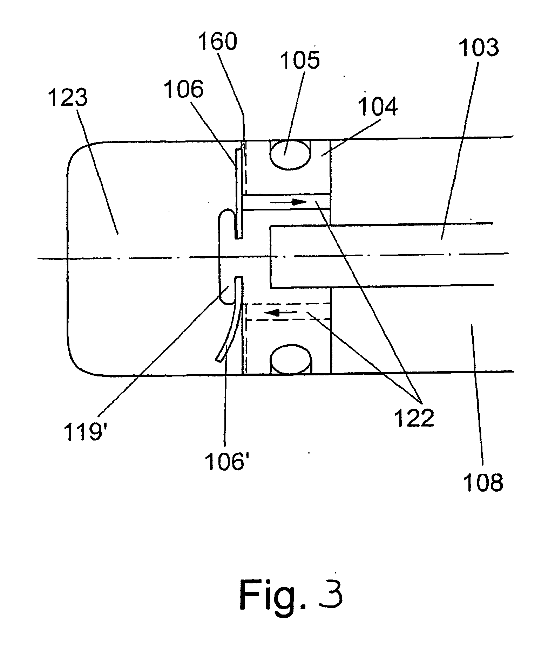

In Figur 3 ist ein verformtes Ende 119' dargestellt, das die Platte 106 statt an der Kolbenstange 103 am Kolben 104 fixiert, wobei auch andere Befestigungsmechaniken eingesetzt werden können. In dem Kolben 104 sind ein oder mehrere Durchgangskanäle 122 ausgebildet, die sich parallel zu Achse der Kolbenstange 103 erstrecken. Wird die Kolbenstange 103 in das Gehäuse 102 hineingedrückt (obere Hälfte der Figur 3) liegt die Platte 106 an dem Kolben 104 an und die Nuten 160 bilden den engsten Strömungsquerschnitt des Strömungskanals zwischen dem Innenraum 108 und dem gegenüberliegenden Innenraum 123. Das Hineindrücken der Kolbenstange 103 erfolgt daher schwergängig.

Wird an der Kolbenstange 103 gezogen (untere Hälfte der Figur 3), biegt sich die Platte 106 weg von dem Kolben 104, bis beispielsweise die Position 106' erreicht ist und die Nuten 160 beabstandet von der Platte 106 angeordnet sind und das Fluid von dem Innenraum 108 durch die Durchgangskanälen 122 zu dem Innenraum 123 strömen kann, ohne die Nuten 160 zwingend zu durchlaufen. Dadurch kann ein wesentlich größerer Strömungsquerschnitt genutzt werden, und das Herausziehen der Kolbenstange 103 erfolgt sehr leichtgängig. Hierfür ist die Platte biegbar ausgebildet und besteht beispielsweise aus Kunststoff, vorzugsweise aus einer Kunststofffolie PET, so dass nach einer Bewegung der Kolbenstange 103 die Platte 106 sich wieder in die Position benachbart zur dem Kolben 104 senkrecht zu der Achse der Kolbenstange 103 bewegt. Statt einem Umbiegen der Platte 106 ist es natürlich auch möglich, die Platte 106 von dem Kolben 104 abzuheben.

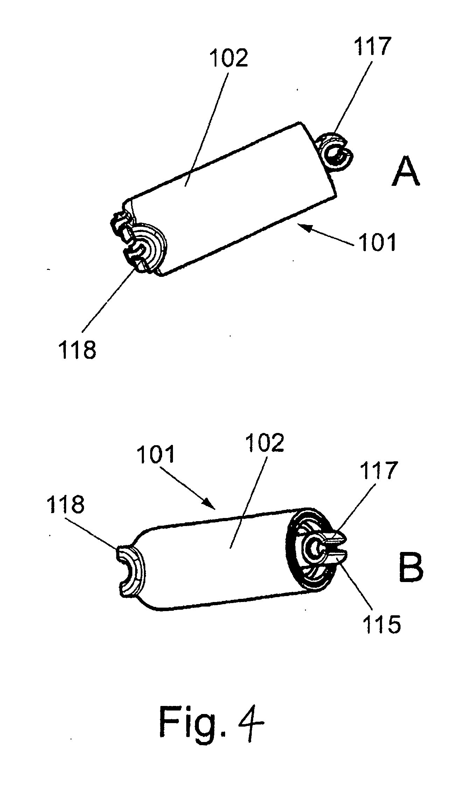

In den Figuren 4A und 4B ist ein Dämpfer 101 gezeigt, dessen Gehäuse 102 an einer Seite eine nach außen offene Öse 118 aufweist, wobei an der gegenüberliegenden Seite die nach außen offene Öse 117 des Rastelementes 115 an der Kolbenstange 103 zu sehen ist. Beide Ösen 117 und 118 ermöglichen eine einfache und schnelle Montage des Dämpfers 101.

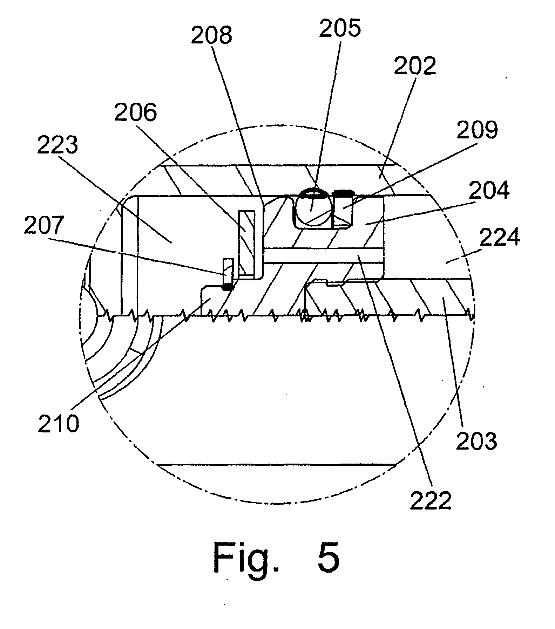

In Figur 5 ist ein im Bereich eines Kolbens 204 gegenüber dem Ausführungsbeispiel der Figur 1 leicht modifizierte Ausführungsbeispiel gezeigt. Der Kolben 204 ist in einem zylindrischen Gehäuse 202 des Dämpfers verschiebbar. Der Kolben 204 ist dabei über eine Rast- oder Bajonettverbindung an einer Kolbenstange 203 fixiert und weist mindestens einen axialen Strömungskanal 222 auf. Am äußeren Umfang des Kolbens 204 ist eine Nut vorgesehen in der ein als O-Ring ausgebildeter Dichtring 205 eingefügt ist, so dass die auf gegenüberliegenden Seiten des Kolbens 204 gebildeten Kammern 223 und 224 über den Kolben 204 und den Dichtring 205 voneinander getrennt sind. Benachbart zu dem Dichtring 205 ist in der Nut ein geschlitzter Stützring 209 aus einem steifen Material, wie Kunststoff oder Metall eingefügt, der ein Verschieben des Dichtringes 205 in der Nut vermeidet und den Dichtring 205 auch in axiale Richtung komprimieren kann. Denn bei hohen Drücken kann der Dichtring 205 in der Nut ansonsten so verrutschen, dass keine ausreichende Dichtigkeit mehr gewährleistet ist und der Dämpfer nicht mehr funktionstüchtig ist.

Auf der Seite der Kammer 223 ist an dem Kolben 204 eine Platte 206 vorgesehen, die an einem zylindrischen Fortsatz 210 durch einen Sprengring 207 axial gesichert ist. Die Platte 206 ist mit axialem Spiel zwischen dem Sprengring 207 und einer Seitenfläche 208 des Kolbens 204 gehalten, so dass bei einer Bewegung des Kolbens 204 die Platte 206 entweder an der Seitenfläche 208 oder am Sprengring 207 anliegt, und somit ein Strömungskanal im Bereich von radialen Nuten an der Platte 206 und/oder an der Seitenfläche 208 vergrößert oder verkleinert wird.

Als Fluid wird für die gezeigten Dämpfer vorzugsweise ein Öl, insbesondere Silikonöl, eingesetzt, aber auch andere Fluide können zur Dämpfung verwendet werden.

## Patentansprüche

1. Dämpfer ( 101) für Möbel, insbesondere für Scharniere, mit einem Gehäuse ( 102,202), in dem ein mit einer Kolbenstange ( 103,203) verbundener Kolben (104) verschiebbar aufgenommen ist, wobei ein Fluid bei einer Bewegung des Kolbens (104, 204) innerhalb des Gehäuses ( 102, 202) durch einen Strömungskanal (120) am oder im Kolben ( 104, 204) strömt, wobei bei Bewegung des Kolbens (104) in unterschiedliche Richtungen eine unterschiedliche Dämpfungskraft erhalten wird und der Querschnitt des Strömungskanals (120) bereichsweise veränderbar ist und an der Kolbenstange (103) ein Rastmittel (115) zum Verbinden mit einem weiteren Bauteil vorgesehen ist, **dadurch gekennzeichnet, dass** die Kolbenstange (103) aus Metall besteht und als Rastmittel ein Rastelement (115) an der Kolbenstange (103) fixiert ist, wobei der Dämpfer als Druckdämpfer ausgebildet ist, und wobei das Gehäuse (102) eine nach außen offene Öse (118) für eine Montage des Dämpfers (101) aufweist und/oder an der Kolbenstange (103) das Rastelement (115) mit einer nach außen offenen Öse (117) vorgesehen ist.

2. Dämpfer nach Anspruch 1, **dadurch gekennzeichnet, dass** das Rastelement (115) über eine Rastnase (116) an einer Nut oder Verprägung der Kolbenstange (103) fixiert ist.

3. Dämpfer nach Anspruch 1 oder 2, **dadurch gekennzeichnet, dass** die Haltekräfte des Rastelementes (115) an der Kolbenstange (103) größer als die entgegenwirkenden Kräfte beim Herausziehen der Kolbenstange (103) sind.

4. Dämpfer nach einem der Ansprüche 1 bis 3, **dadurch gekennzeichnet, dass** die nach außen offene Öse (117) an der Kolbenstange (103) biegbare Schenkel aufweist.

5. Dämpfer nach einem der Ansprüche 1 bis 4, **dadurch gekennzeichnet, dass** Kolbenstange (103) einen Durchmesser zwischen 1,5mm und 3,5mm aufweist.

6. Dämpfer nach einem der Ansprüche 1 bis 5, **dadurch gekennzeichnet, dass** zur Veränderung des Querschnittes des Strömungskanals (120) der Kolben relativ zu einer Platte, 106, 206) bewegbar ist.

7. Dämpfer nach einem der Ansprüche 1 bis 6, **dadurch gekennzeichnet, dass** die Platte (106, 206) und/oder der Kolben (104, 204) sich radial erstreckende Nuten (160) aufweist, die zumindest einen Teil des Strömungskanals (120) bilden.

8. Dämpfer nach einem der Ansprüche 1 bis 7, **dadurch gekennzeichnet, dass** als Fluid Öl, insbesondere Silikonöl, in dem Dämpfer enthalten ist.

9. Scharnier für Möbel mit einem Dämpfer nach einem der vorhergehenden Ansprüche.

## Claims

1. Damper (101) for furniture, in particular for hinges, with a housing (102, 202) in which a piston (104), which is connected to a piston rod (103, 203), is displaceably accommodated, wherein, upon movement of the piston (104, 204) within the housing (102, 202), a fluid flows through a flow channel (120) on or in the piston (104, 204), and wherein, upon movement of the piston (104) in different directions, a different damping force is obtained and regions of the cross section of the flow channel (120) are changeable, and a latching means (115) for connection to a further component is provided on the piston rod (103), **characterized in that** the piston rod (103) is composed of metal and a latching element (115) is fixed as a latching means on the piston rod (103), wherein the damper is designed as a pressure damper, and wherein the housing (102) has an outwardly open lug (118) for installation of the damper (101), and/or the latching element (115) on the piston rod (103) is provided with an outwardly open lug (117).

2. Damper according to Claim 1, **characterized in that** the latching element (115) is fixed in a groove or stamping of the piston rod (103) via a latching nose (116).

3. Damper according to Claim 1 or 2, **characterized in that** the retaining forces of the latching element (115) on the piston rod (103) are greater than the opposing forces during the extension of the piston rod (103).

4. Damper according to one of Claims 1 to 3, **characterized in that** the outwardly open lug (117) on the piston rod (103) has bendable limbs.

5. Damper according to one of Claims 1 to 4, **characterized in that** the piston rod (103) has a diameter of between 1.5 mm and 3.5 mm.

6. Damper according to one of Claims 1 to 5, **characterized in that**, in order to change the cross section of the flow channel (120), the piston is moveable relative to a plate (106, 206).

7. Damper according to one of Claims 1 to 6, **characterized in that** the plate (106, 206) and/or the piston (104, 204) have/has radially extending grooves (160) which form at least part of the flow channel (120).

8. Damper according to one of Claims 1 to 7, **characterized in that** the fluid contained in the damper is oil, in particular silicone oil.

9. Hinge for furniture with a damper according to one of the preceding claims.

## Revendications

1. Amortisseur (101) pour meuble, en particulier pour charnières, comportant un boîtier (102, 202), dans lequel est logé de manière à pouvoir être coulissé un piston (104) relié à une tige de piston (103, 203), un fluide s'écoulant au niveau du piston ou dans le piston (104, 204) par un canal d'écoulement (120) à l'intérieur du boîtier (102, 202) lors d'un déplacement du piston (104, 204), lors du déplacement du piston (104) dans diverses directions, une force d'amortissement différente étant obtenue et la section transversale du canal d'écoulement (120) pouvant être modifiée par endroits et un moyen d'enclenchement (115) servant à établir une liaison avec un autre composant étant prévu sur la tige de piston (103), **caractérisé en ce que** la tige de piston (103) est constituée de métal, et **en ce qu'**un élément d'enclenchement (115) est fixé sur la tige de piston (103) en tant que moyen d'enclenchement, l'amortisseur étant réalisé comme un amortisseur de pression et le boîtier (102) présentant un oeillet (118) ouvert vers l'extérieur pour un montage de l'amortisseur (101) et/ou l'élément d'enclenchement (115) doté d'un oeillet (117) ouvert vers l'extérieur étant prévu sur la tige de piston (103).

2. Amortisseur selon la revendication 1, **caractérisé en ce que** l'élément d'enclenchement (115) est fixé au niveau d'une rainure ou d'un emboutissage de la tige de piston (103) par l'intermédiaire d'un ergot d'enclenchement (116).

3. Amortisseur selon la revendication 1 ou 2, **caractérisé en ce que** les forces de maintien de l'élément d'enclenchement (115) au niveau de la tige de piston (103) sont plus grandes que les forces opposées lors du retrait de la tige de piston (103).

4. Amortisseur selon l'une quelconque des revendications 1 à 3, **caractérisé en ce que** l'oeillet (117) ouvert vers l'extérieur sur la tige de piston (103) présente des branches flexibles.

5. Amortisseur selon l'une quelconque des revendications 1 à 4, **caractérisé en ce que** la tige de piston (103) présente un diamètre compris entre 1,5 mm et 3,5 mm.

6. Amortisseur selon l'une quelconque des revendications 1 à 5, **caractérisé en ce que** le piston peut être déplacé par rapport à une plaque (106, 206) afin de modifier la section transversale du canal d'écoulement (120).

7. Amortisseur selon l'une quelconque des revendications 1 à 6, **caractérisé en ce que** la plaque (106, 206) et/ou le piston (104, 204) présentent des rainures (160) s'étendant radialement, lesquelles forment au moins une partie du canal d'écoulement (120).

8. Amortisseur selon l'une quelconque des revendications 1 à 7, **caractérisé en ce que** l'amortisseur contient en tant que fluide, de l'huile, en particulier de l'huile de silicone.

9. Charnière pour meuble comportant un amortisseur selon l'une quelconque des revendications précédentes.
